(19) Europäisches Patentamt
European Patent Office
Office européen des brevets

(11) Veröffentlichungsnummer: **0 283 790 B1**

(12) **EUROPÄISCHE PATENTSCHRIFT**

(45) Veröffentlichungstag der Patentschrift: **09.10.91**

(51) Int. Cl.⁵: **B65G 47/24**

(21) Anmeldenummer: **88103334.4**

(22) Anmeldetag: **04.03.88**

(54) **Vorrichtung zum Transportieren und Drehen von Gegenständen.**

(30) Priorität: **27.03.87 DE 3710105**

(43) Veröffentlichungstag der Anmeldung:
**28.09.88 Patentblatt 88/39**

(45) Bekanntmachung des Hinweises auf die
Patenterteilung:
**09.10.91 Patentblatt 91/41**

(84) Benannte Vertragsstaaten:
**AT BE CH DE ES FR GB GR IT LI NL SE**

(56) Entgegenhaltungen:
**US-A- 4 164 281**

(73) Patentinhaber: **UNILEVER NV**
**Burgemeester s'Jacobplein 1 P.O. Box 760**
**NL-3000 DK Rotterdam(NL)**

(84) Benannte Vertragsstaaten:
**BE CH DE ES FR GR IT LI NL SE AT**

Patentinhaber: **UNILEVER PLC**
**Unilever House Blackfriars P.O. Box 68**
**London EC4P 4BQ(GB)**

(84) Benannte Vertragsstaaten:
**GB**

(72) Erfinder: **De Schryder, Marc**
**Maisoncelle Tuilerie**
**F-60480 Froissy(FR)**

(74) Vertreter: **Hutzelmann, Gerhard et al**
**Duracher Strasse 22**
**W-8960 Kempten(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf eine Vorrichtung zum Transportieren und gleichzeitigen Drehen von Gegenständen, insbesondere von becherförmigen Gegenständen, um ihre vertikale Achse, mit einer Transporteinrichtung zum Fördern der Gegenstände, auf welcher die Gegenstände mit ihrem Eigengewicht aufstehen, dabei von einer Dreheinrichtung erfaßt und um ihre vertikale Achse gedreht werden.

Aus der US-A-4 164 281 ist eine derartige Vorrichtung bekannt, bei welcher der zu drehende Gegenstand einer ständigen Drehbewegung ausgesetzt ist und beim Erreichen einer vorbestimmten Position gegen diese Drehkraft festgehalten wird. Bei leichten und empfindlichen Gegenständen ist diese bekannte Vorrichtung nicht einsetzbar, da es unweigerlich zu Beschädigungen des zu drehenden Gegenstandes kommen würde.

Der Erfindung liegt die Aufgabe zugrunde, eine Vorrichtung zu schaffen, mit welcher Gegenstände schonend und gezielt gedreht werden können, während sie transportiert werden.

Diese Aufgabe wird erfindungsgemäß dadurch gelöst, daß die Dreheinrichtung einen um eine Drehachse drehbaren Drehteller aufweist, an dem zwei diametral gegenüberliegende Arme fest angeordnet sind, welche mit ihren Enden in Führungskulissen eingreifen, die in Bewegungsrichtung der Dreheinrichtung zur Drehachse des Drehtellers zunehmenden und wieder abnehmenden Abstand aufweisen, wobei der größte Abstand zwischen der Drehachse des Drehtellers und der Führungskulisse gleich dem Abstand der Drehachse des Drehtellers und dem Ende der Arme entspricht und die Führungskulisse die Arme und damit den Drehteller um etwa 90° schwenkt und die andere Führungskulisse die Dreheinrichtung in die Ausgangsposition zurückbringt.

Damit ist eine äußerst einfach aufgebaute Vorrichtung geschaffen, die aber exakt arbeitet und dabei die zu drehenden Gegenstände nicht übermäßig belastet.

Sehr vorteilhaft ist es dabei, wenn erfindungsgemäß die Führungskulissen als im Querschnitt U-förmige Schienen ausgebildet sind, in welche an den Armen angeordnete Rollen eingreifen.

Damit wird einerseits eine exakte Führung der Arme in den Führungskulissen erzielt und andererseits ein reibungsarmer Bewegungsablauf gewährleistet.

Eine weitere vorteilhafte Ausgestaltung der Erfindung liegt darin, daß jede der beiden Führungskulissen mit einer in der Breite vergrößerten Einlauföffnung versehen ist.

Dadurch ist das Einlaufen der jeweiligen Rolle bzw. das Eindringen des Armendes in die Führungskulisse ganz erheblich erleichtert.

In der Zeichnung ist die Erfindung anhand eines Ausführungsbeispiels veranschaulicht. Dabei zeigen:

Fig. 1     eine schaubildliche Darstellung einer Einrichtung zum Transportieren und Drehen von becherförmigen Gegenständen,

Fig. 2     einen Querschnitt durch die Einrichtung nach Fig. 1 mit einem Aufnahmeteil für die Gegenstände

Fig. 3     das Aufnahmeteil in größerem Maßstab und

Fig. 4     einen Teil einer Führungs-Kulisse für die Dreharme des Aufnahmeteils.

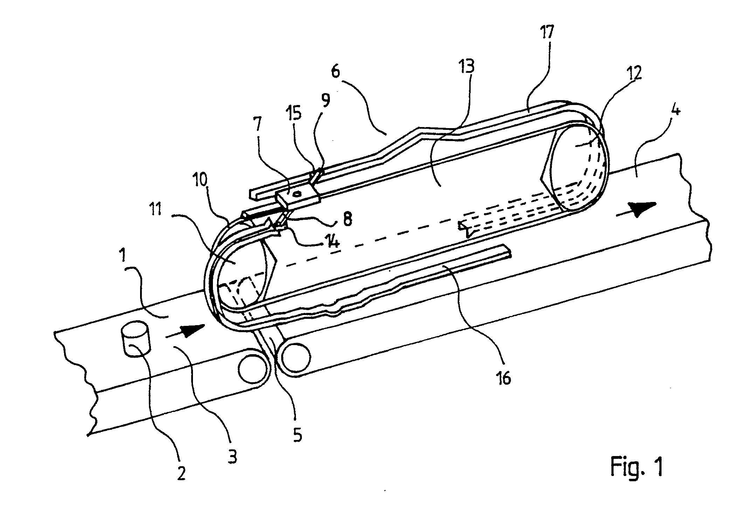

In Fig. 1 ist mit 1 ein Förderband bezeichnet, auf dem becherförmige Gegenstände 2 in Richtung des Pfeiles 3 herantransportiert werden. An das Förderband 1 schließt ein Förderband 4 an, das zum Abtransport der Gegenstände 2 dient. In dem Spalt zwischen den beiden Förderbändern 1 und 4 ist eine Abdeckleiste 5 vorgesehen, welche einen einwandfreien Übergang der Gegenstände vom einen zum anderen Förderband gewährleistet. Oberhalb dieser beiden Förderbänder ist eine Dreheinrichtung 6 vorgesehen, die einen Drehteller 7 aufweist, an dem zwei Arme 8 und 9 drehfest angeordnet sind. Der Drehteller 7 ist an einer Kette 10 gelagert, die ihrerseits über zwei Rollen 11 und 12 geführt ist. Des weiteren ist eine Tragschiene 13 für die Kette 10 vorgesehen, welche ein Durchhängen der Kette verhindert. Am Ende der beiden Arme 8 und 9 ist jeweils eine Rolle 14,15 drehbar gelagert, von denen die Rolle 14 in eine Führungs-Kulisse 16 und die Rolle 15 in eine der Rückführung dienende zweite Führungs-Kulisse 17 eingreift.

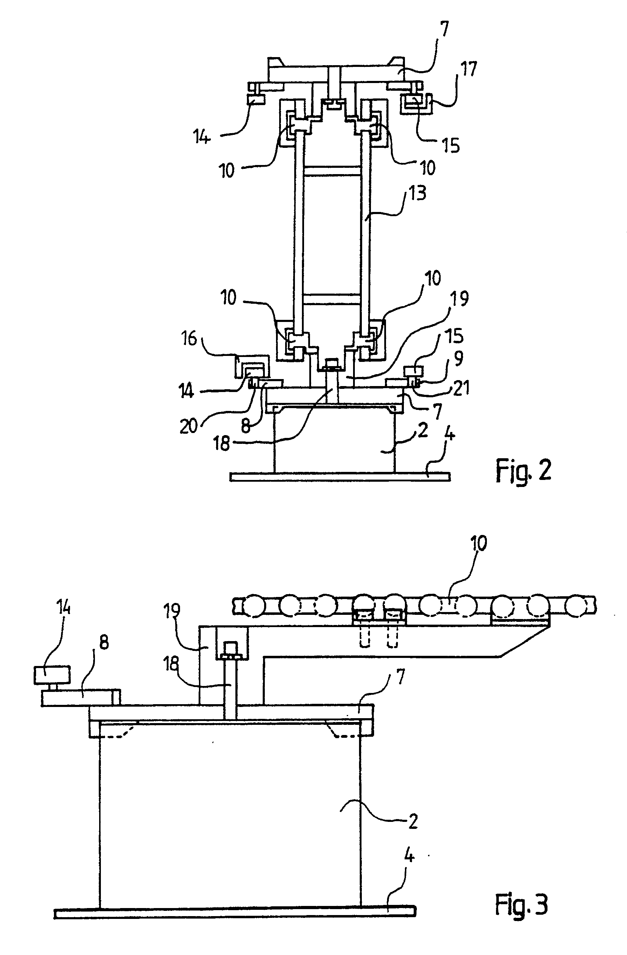

Bei dem in Fig. 2 dargestellten Querschnitt der Einrichtung steht ein Gegenstand 2 auf dem Förderband 4 auf und ist an seiner Oberseite gleichzeitig vom Drehteller 7 gehalten. Der Drehteller 7 ist über einen Stift 18 drehbar an einem Tragteil 19 gelagert, das seinerseits an der doppelt ausgeführten Kette 10 befestigt ist. Diese doppelte Kette 10 läuft in Aussparungen der Tragschiene 13, wodurch ihr exakter Lauf garantiert ist. Am Drehteller 7 sind die beiden Arme 8 und 9 diametral gegenüberliegend befestigt. An ihrem jeweiligen Ende ist die Rolle 14 bzw. 15 über eine Drehachse 20 bzw. 21 drehbar gelagert. Die Rolle 14 greift dabei in die Führungs-Kulisse 16 ein, die im Querschnitt U-förmig ausgebildet ist.

Oberhalb der Tragschiene 13 ist ein weiterer Drehteller 7 dargestellt, der sich gerade in der Rückführung befindet, d.h. keinen Gegenstand festhält. In diesem Rückführungsabschnitt greift die Rolle 15 in die Führungs-Kulisse 17 ein, während die Rolle 14 frei ist.

Die Fig. 3 zeigt im wesentlichen die Befestigung des Tragteils 19 an der Kette 10, und zwar von der Seite her gesehen.

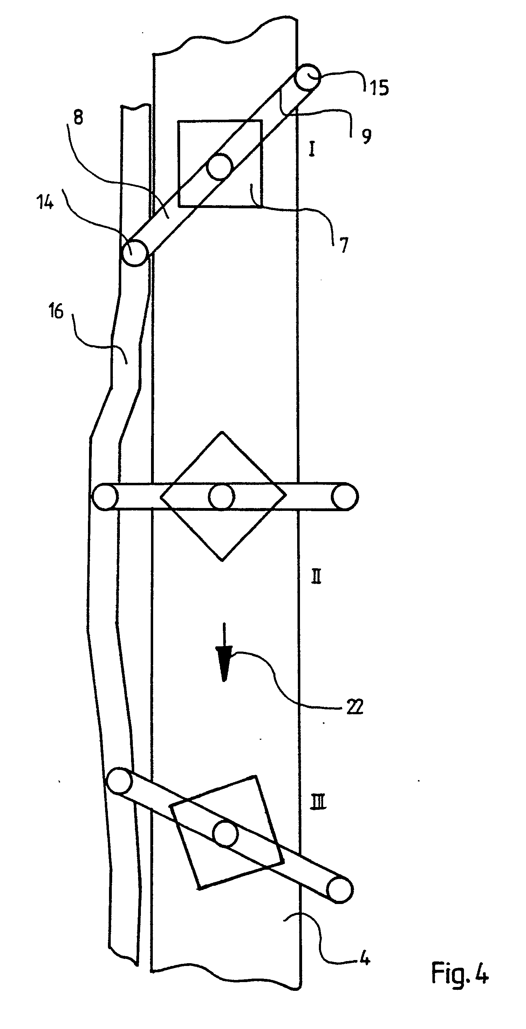

Die Fig. 4 zeigt dagegen einen Abschnitt der Führungs-Kulisse 16 mit dem Drehteller 7 in drei verschiedenen Positionen. Die Position I zeigt dabei den Drehteller 7 in der Einlaufstellung, in welcher er den Gegenstand 2 (nicht dargestellt) erfaßt. Bei der durch das Förderband 4 erzwungenen Bewegung in Richtung des Pfeiles 22 wird die Rolle 14 durch die Führungs-Kulisse 16 nach außen bewegt, wodurch sich der Drehteller 7 zwangsläufig dreht. An der in Position II gezeigten Stelle verläuft die Führungs-Kulisse 16 am weitesten von der Drehachse des Drehtellers entfernt, wodurch der Arm 8 quer zur Bewegungsrichtung (Pfeil 22) ausgelenkt wird. Im weiteren Verlauf wird die Rolle 14 dann nachgeschleppt, und der Drehteller nimmt die in Position III gezeigte Stellung ein. Am Ende der Führungs-Kulisse 16 steht der Arm 9 in gleichem Maße vor wie am Einlauf der Arm 8 nach vorne zeigte. In der Führungs-Kulisse 17 erfolgt dann das gleiche mit der Rolle 15 bzw. dem diese tragenden Arm 9, so daß am Ende dieser zweiten Führungs-Kulisse die Rückführung des Drehtellers in die Ausgangsstellung bewirkt ist. Zur Erleichterung des Einlaufes der Rollen 14,15 in die Führungs-Kulissen sind beide mit einer vergrößerten Einlauföffnung versehen.

## Patentansprüche

1. Vorrichtung zum Transportieren und gleichzeitigen Drehen von Gegenständen(2), insbesondere von becherförmigen Gegenständen(2), um ihre vertikale Achse, mit einer Transporteinrichtung zum Fördern der Gegenstände(2), auf welcher die Gegenstände mit ihrem Eigengewicht aufstehen, dabei von einer Dreheinrichtung(6) erfaßt und um ihre vertikale Achse gedreht werden, **dadurch gekennzeichnet,** daß die Dreheinrichtung(6) einen um eine Drehachse drehbaren Drehteller(7) aufweist, an dem zwei diametral gegenüberliegende Arme(8,9) fest angeordnet sind, welche mit ihren Enden in Führungskulissen(16,17) eingreifen, die in Bewegungsrichtung der Dreheinrichtung(6) einen zur Drehachse des Drehtellers(7) zunehmenden und wieder abnehmenden Abstand aufweisen, wobei der größte Abstand zwischen der Drehachse des Drehtellers(7) und der Führungskulisse(16,17) gleich dem Abstand der Drehachse des Drehtellers(7) und dem Ende der Arme(8,9) entspricht und die eine Führungskulisse(16) die Arme und damit den Drehteller(7) um etwa 90° schwenkt und die andere Führungskulisse(17) die Dreheinrichtung in die Ausgangsposition zurückbringt.

2. Vorrichtung nach Anspruch 1, **dadurch gekennzeichnet,** daß die Führungskulissen (16,17) als im Querschnitt U-förmige Schienen ausgebildet sind, in welche an den Armen(8,9) angeordnete Rollen(14,15) eingreifen.

3. Vorrichtung nach Anspruch 1 oder 2, **dadurch gekennzeichnet,** daß jede der beiden Führungskulissen(16,17) mit einer in der Breite vergrößerten Einlauföffnung versehen ist.

## Claims

1. Apparatus for the simultaneous transporting and turning of objects (2) - particularly tub-like objects (2) - around their vertical axis, with a unit for transporting the objects (2), on which the objects stand under the influence of their own weight, are taken hold of by a turning unit (6) and are turned around their vertical axis, wherein the turning unit (6) has a turning device (7) which turns around an axle and to which two diametrically opposite arms (8, 9) are fixed, the ends of which engage guide rails (16, 17) that are located an increasing and then decreasing distance from the axle of the turning device (7) in the direction of movement of the turning unit (6), the largest distance between the axle of the turning device (7) and the guide rail (16, 17) corresponding to the distance between the axle of the turning device (7) and the end of the arms (8, 9), one guide rail (16) turning the arms and thus the turning device (7) through roughly 90° and the other guide rail (17) returning the turning unit to its original position.

2. Apparatus according to claim 1, wherein the guide rails (16, 17) are designed as rails with a U-shaped cross-section which are engaged by rollers (14, 15) located on the arms (8, 9).

3. Apparatus according to claim 1 or 2, wherein each of the two guide rails (16, 17) is provided with a widened opening at its infeed end.

## Revendications

1. Dispositif pour transporter et tourner simultanément autour de leur axe vertical des objets (2), notamment des objets en forme de godets (2), avec un dispositif convoyeur pour transporter les objets (2), sur lequel les objets se tiennent debout par leur propre poids, et sont saisis par un mécanisme de rotation (6) et tournés autour de leur axe vertical, **caractérisé** en ce que le mécanisme de rotation (6) présente un plateau rotatif (7) qui peut tourner autour d'un axe de rotation et sur lequel sont disposés rigidement deux bras diamétralement opposés (8, 9) qui s'engagent par leurs extrémités dans des coulisses de guidage (16, 17) qui présentent une distance de l'axe de rotation du plateau rotatif (7) qui, dans le sens de déplacement du mécanisme de rotation (6), augmente pour diminuer ensuite à nouveau, la distance maximale entre l'axe de rotation du plateau rotatif (7) et les coulisses de guidage (16, 17) étant égale à la distance entre l'axe de rotation du plateau rotatif (7) et l'extrémité des bras (8, 9), et l'une (16) des coulisses de guidage faisant pivoter les bras et par suite le plateau rotatif (7) d'environ 90°, tandis que l'autre coulisse de guidage (17) ramène le mécanisme de rotation dans sa position initiale.

2. Dispositif selon la revendication 1, **caractérisé** en ce que les coulisses de guidage (16, 17) sont réalisées sous forme de barres à section en U, dans lesquelles s'engagent des galets (14, 15) disposés sur les bras (8, 9).

3. Dispositif selon la revendication 1 ou 2, **caractérisé** en ce que chacune des deux coulisses de guidage (16, 17) est dotée d'une ouverture d'entrée de largeur agrandie.

Fig. 1

EP 0 283 790 B1

Fig. 2

Fig. 3

Fig. 4